Europäisches Patentamt

European Patent Office

Office européen des brevets

(11) Publication number: **0 295 845**
**B1**

# EUROPEAN PATENT SPECIFICATION

(45) Date of publication of patent specification: **16.01.91**  (51) Int. Cl.⁵: **G 01 F 1/20**

(21) Application number: **88305367.0**

(22) Date of filing: **13.06.88**

(54) **Fluidic oscillator.**

(30) Priority: **19.06.87 GB 8714395**

(43) Date of publication of application:
**21.12.88 Bulletin 88/51**

(45) Publication of the grant of the patent:
**16.01.91 Bulletin 91/03**

(84) Designated Contracting States:
**BE CH DE ES FR GB IT LI NL SE**

(56) References cited:
**DE-A-2 414 970**
**GB-A-2 177 204**
**US-A-4 107 990**

(73) Proprietor: **British Gas plc**
**Rivermill House 152 Grosvenor Road**
**London SW1V 3JL (GB)**

(72) Inventor: **Churchill, David Alan**
**86 Castle Lane**
**Solihull West Midlands (GB)**
Inventor: **Parkinson, Geoffrey John**
**40 Longdon Drive**
**Sutton Coldfield West Midlands (GB)**

(74) Representative: **Morgan, David James**
**British Gas plc Patents, Licensing & Commercial**
**Dev. 326 High Holborn**
**London WC1V 7PT (GB)**

## Description

This invention concerns a fluidic oscillator for a shunt flowmeter for measuring fluid flow through a pipeline.

Mass flow sensors fabricated on silicon chips are being designed and developed by semiconductor manufacturers and it would be desirable to exploit the capabilities of such sensors to improve the flowmetering of fluids, such as, air and other gas supplies in industrial plants. However, the linear dimensions of the active flow sensing elements on silicon chips are typically 1 or 2 mm whereas the dimensions of industrial air and other gas supply pipelines are typically 25 to 300 mm in diameter. Hence, the accurate measurement of air or gas flows in such pipelines using silicon chip flow sensors is not straightforward, particularly in the case of air, as this often originates from factory atmospheres which are contaminated with process dust and dirt. Also, in the case of combustion air, there can be flow oscillations arising in varying degrees in the air supply lines from the use of combustion air fans. It is envisaged that a flowmeter suitable for use with a silicon chip sensor could be based on fluidic oscillator principles. The accuracy and range of flow measurement would then primarily depend upon the geometry of the fluidic oscillator, with the silicon chip flow sensor being used in a digital mode for detecting and counting the fluid flow oscillations or reversals. In these circumstances, it would be desirable to design the fluidic oscillator so that it could be used with the standard range of pipeline diameters and one solution to this pipeline sizing problem is the development of a fluidic unit that can be used in a shunt or bypass flowmeter with any size of pipeline diameter. The shunt arrangements is particularly attractive for air supply pipes, which correspond to the larger pipe diameters, as this would also provide a way of protecting the flow sensor from high velocity dust impingement.

GB-A-2177204 discloses a fluidic oscillator of a type (hereinafter called the type referred to) comprising a first flow section having an inlet end, an interaction chamber, a main fluid nozzle connected to the inlet end of the first flow section and directed into the interaction chamber, and a second flow section downstream of and juxtaposed the first flow section, said second section having an outlet end, and sensor ports opening into said second section upstream of said outlet end.

A drawback of the fluidic oscillator in GB-A-2177204 is that it is to be used in series or in line with the pipeline and is thus bulky. Because it is envisaged to use a fluidic oscillator in shunt with the pipeline, connections between the fluidic oscillator and the pipeline can be of lesser diameter than that of the pipeline interior and thus the width of the fluidic oscillator can be reduced. But the length of a fluid flow path directly through a fluidic oscillator is a direct function of the fluid flow rate therethrough. Thus the overall length a body of a known fluidic oscillator is long because it is substantially the same length as said path.

An object of the invention is to reduce the overall length of a fluidic oscillator of the type referred to so as to make it capable of being made more compact for a fluid flowmeter to be used in shunt mode.

According to the invention there is provided a fluidic oscillator for a shunt flowmeter for measuring fluid flow through a pipeline, the fluidic oscillator comprising a first flow section having an inlet end, an interaction chamber, a main fluid nozzle connected to the inlet end of this first section and directed into the interaction chamber, diverging sidewalls extending downstream from the interaction chamber, and feedback loops extending from the diverging sidewalls to control nozzles at the interaction chamber, and a second flow section downstream of and juxtaposed the first flow section, said second flow section having an outlet end, and sensor ports opening into the second flow section upstream of said outlet, characterised in that the first and second flow sections are disposed side-by-side so that the general direction of fluid flow through the first flow section is substantially parallel to but opposite to the general direction of fluid flow through the second flow section, and the sensor ports each opening at one end at an exterior of the fluidic oscillator and each opening at another end into the second flow section so that by means of the sensor ports a flow sensor can be connected to the second flow section for detecting oscillations in the fluid flow through the second flow section.

By so disposing the first and second flow sections side-by-side, the overall length of the fluidic oscillator is shortened.

A flow conditioner can be disposed across at least the inlet end of the first flow section, the conditioner serving both to promote turbulence of the fluid flowing into the inlet end and as a filter for removing particulate matter from the fluid.

The second flow section can include a flow-splitting body for physically dividing the flow from the first flow section. The sensor ports can be disposed respectively on opposite sides of the flow-splitting body and are not formed in said flow-splitting body.

The second flow section can have diverging side walls which terminate in a flow restriction adjacent to the outlet end of the second flow section.

Preferably the first flow section has an outlet end connected to an inlet end of the second flow section by a third flow section. For example, the third flow section is disposed substantially at right angles both to the outlet end of the first flow section and to the inlet end of the second flow section. The third flow section can have substantially parallel sidewalls.

The third flow section can have substantially parallel side walls and a flow-splitting partition disposed parallel to the sidewalls of the third flow section, and said flow-splitting partition being aligned with the flow-splitting body of the second flow section.

A flow-splitting member can be disposed at and adjacent to the outlet end of the first flow section in alignment with the flow splitting partition of the third flow section.

The three flow sections are formed respectively in three parts which are assembled together to construct the oscillator.

The flow conditioner can be mounted in a fourth part which is assembled to the inlet end of the first flow section and to the outlet end of the second flow section.

A shunt flowmeter for measuring fluid flow through a pipeline has a flow sensor and a fluidic oscillator formed in accordance with the invention, said sensor being provided to detect oscillations in the fluidic oscillator via the sensor ports.

Said flow sensor can include a silicon chip sensor.

The flow meter is mounted in a shunt combination with a pipeline so that the inlet end to the first flow section is connected to a shunt outlet port in the pipeline and the outlet end of the second flow section is connected to a shunt return port in the pipeline.

The shunt flowmeter comprising a flow sensor including a silicon chip sensor can be mounted in a shunt combination with a pipeline so that the inlet end to the first flow section is connected to a shunt outlet port in a wall of the pipeline and the outlet end of the second flow section is connected to a shunt return port in the wall of the pipeline, and internally of the pipeline there is a restriction positioned between the shunt outlet and inlet ports.

The invention will now be further described with reference to the accompanying drawings, in which:

Figs. 1, 2 and 3 are respectively plan views of the parts of a fluidic oscillator constructed in accordance with the invention,

Figs. 4 and 5 are sectional views of the assembled oscillator taken on mutually parallel planes through the first and second sections, respectively,

Fig. 6 is a sectional view on a plane at right angles to the sections of Figs. 4 and 5, and

Fig. 7 is an axial section through a pipeline fitted with a flowmeter including the invention.

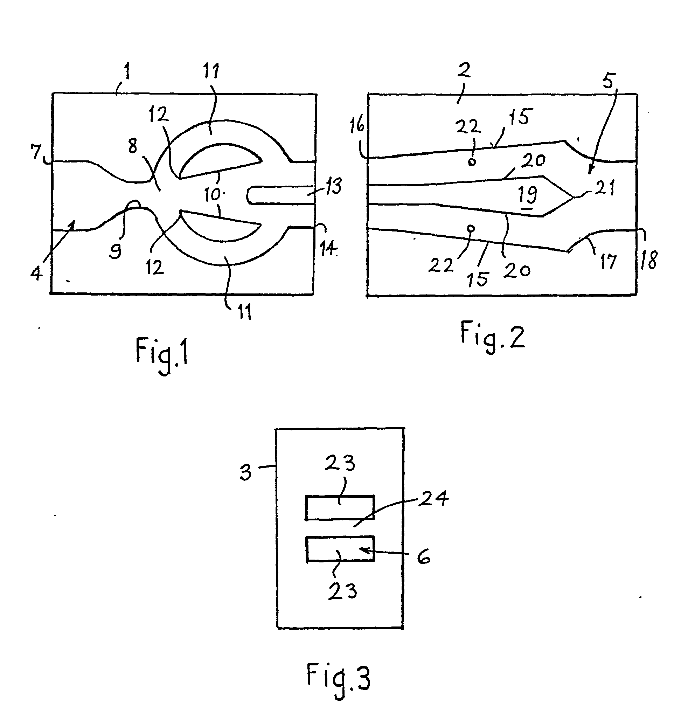

The fluidic oscillator illustrated in the drawings is assembled from three block-shaped parts 1, 2 and 3, each of which contains one of the principal fluid paths or flow sections 4, 5 and 6 of the oscillator. Figs. 1, 2 and 3 are plan views of these disassembled parts, the facing sides of the two parts illustrated in Figs. 1 and 2 having been removed to show the first and second flow sections 4, 5 defined by these parts.

The first flow section 4 comprises an inlet end 7 for connection to an outlet port of a pipeline to which the flowmeter is to be fitted, an interaction chamber 8, a main fluid nozzle 9 connected to the inlet end 7 and directed into the interaction chamber, diverging sidewalls 10 extending from the interaction chamber, and feedback loops 11 extending from the diverging sidewalls, downstream of the interaction chamber, to control nozzles 12 at the interaction chamber. A flow-splitting member 13 for physically dividing the flow through the flow section 4 is disposed at and adjacent the outlet end 14 of the flow section.

The second flow section 5 has diverging sidewalls 15 extending from the inlet end 16 of the section and terminating in a flow restriction 17 adjacent its outlet end 18. A flow-splitting body 19 for physically dividing the flow through the flow section 5 projects from its inlet end 16 to a position adjacent the restriction 17. Along the major portion of its length the sidewalls 20 of the flow-splitting body 19 diverge generally parallel to the sidewalls 15 of the flow section. At the outlet end of the body 19, generally opposite the flow restriction 17, the sidewalls 20 converge to an edge 21. Sensor ports 22, via which a flow sensor is connected to the second flow section, are positioned on opposite sides of the flow-splitting body 19.

The third flow section 6 comprises two mutually parallel channels 23 for joining the outlet and inlet ends 14, 16 of the first and second flow sections and separated from one another by a flow-splitting partition 24 arranged to be aligned with the flow-splitting member 13 and body 19 of the other two flow sections. The overall width of the third flow section corresponds to the width of the outlet and inlet ends of the first and second flow sections and the walls of the channels are mutually parallel.

The various flow passages of the three flow sections 4, 5, 6 are of generally rectangular cross-section.

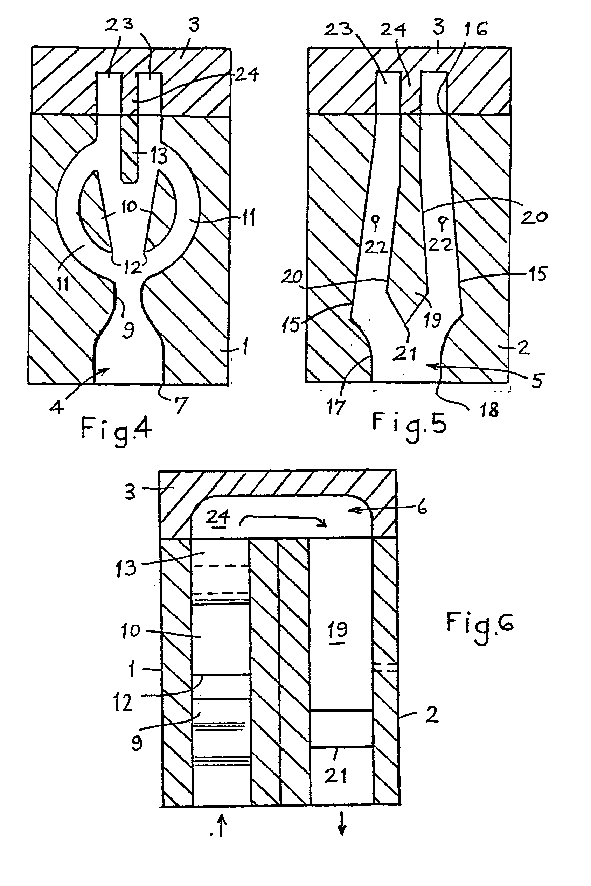

Referring to Figs. 4, 5 and 6, which illustrate sectional views through the assembled oscillator, in the assembled condition, the two block-shaped parts 1, 2 are mounted side-by-side so that the directions of flow through the two flow sections 4, 5 are substantially parallel and in opposite directions and the third part 3 is fastened across the ends of the parts 1, 2 so that the channels 23 are at right angles to the outlet and inlet ends 14, 16 of the first and second flow sections and interconnect the latter with the flow-splitting partition 24 aligned with the flow-splitting member and body 13, 19 of the first and second flow sections. Hence, the three flow sections are arranged in series and provide a generally U-shaped flow path for the oscillator.

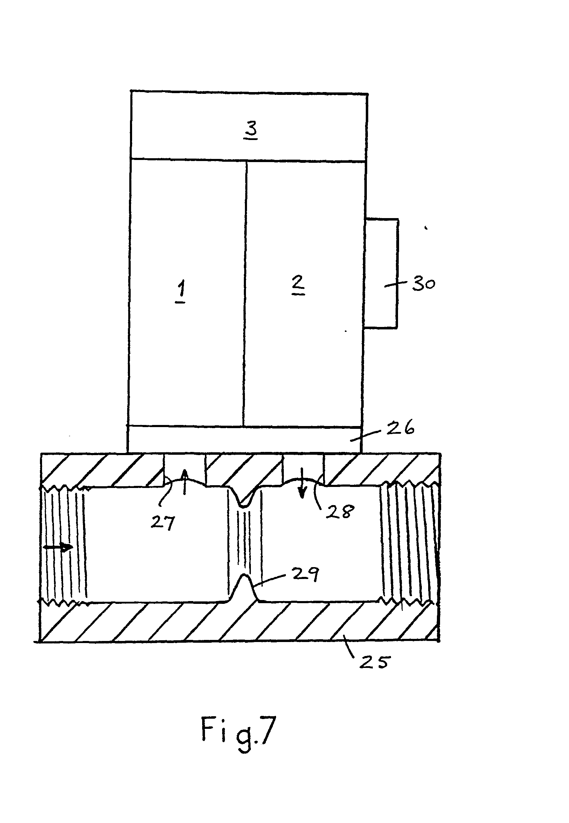

Fig. 7 illustrates a flowmeter incorporating the fluidic oscillator described above mounted on a section 25 of the gas supply pipe and also illustrates a flow conditioner in the form of a wire mesh 26 by which the inlet and outlet ends of the flowmeter may be connected to the pipeline. Hence, the section 25 of pipe is adapted to be connected into a pipeline to be fitted with the flowmeter. It is provided with shunt inlet and outlet ports 27, 28 for bypassing a portion of the gas flow in the pipeline through the flowmeter, these ports being positioned on opposite sides of a restriction 29 formed in the pipe section 25. The flowmeter comprises the assembled parts 1, 2, 3 of the fluidic oscillator, a flow sensor 30 based on a silicon chip and mounted on the outside of the part 2 for detecting the oscillations in the fluidic oscillator, via the sensor ports 22 (Figs. 2 and 5), and the flow conditioner 26 disposed over the inlet and outlet ends of the first and second flow sections of the oscillator and mounting suitable flow conditioner means (not shown) between these inlet and outlet ends and the shunt inlet and outlet ports 27, 28 of the pipe section 25.

## Claims

1. A fluidic oscillator (1, 2, 3) for a shunt flowmeter (1, 2, 3, 30) for measuring fluid flow through a pipeline (25), the fluidic oscillator comprising a first flow section (4) having an inlet end (7), an interaction chamber (8), a main fluid nozzle (9) connected to the inlet end of the first section and directed into the interaction chamber, diverging sidewalls (10) extending downstream from the interaction chamber (8), and feedback loops (11) extending from the diverging sidewalls to control nozzles (12) at the interaction chamber, and a second flow section (5) downstream of and juxtaposed the first flow section (4), said second flow section (5) having an outlet end (18), and sensor ports (22) opening into the second flow section (5) upstream of said outlet end (18), characterised in that the first and second flow sections (4, 5) are disposed side-by-side so that the general direction of fluid flow through the first flow section (4) is substantially parallel to but opposite to the general direction of fluid flow through the second flow section (5), and the sensor ports (22) each opening at one end at an exterior of the fluidic oscillator (1, 2, 3) and each opening at another end into the second flow section (5) so that by means of the sensor ports (22) a flow sensor (30) can be connected to the second flow section (5) for detecting oscillations in the fluid flow through the second flow section (5).

2. A fluidic oscillator as claimed in Claim 1, characterised in that a flow conditioner (26) is disposed across at least the inlet end (7) of the first flow section (4), the conditioner (26) serving both to promote turbulence of the fluid flowing into the inlet end (7) and as a filter for removing particulate matter from the fluid.

3. A fluidic oscillator as claimed in Claim 1 or Claim 2, characterised in that the second flow section (5) includes a flow-splitting body (19) for physically dividing the flow from the first flow section (4).

4. A fluidic oscillator as claimed in Claim 3, characterised in that the sensor ports (22) are disposed respectively on opposite sides of the flow-splitting body (19) and are not formed in said flow-splitting body.

5. A fluid oscillator as claimed in Claim 4, characterised in that the second flow section (5) has diverging side walls (15) which terminate in flow restriction (17) adjacent to the outlet end (18) of the second flow section.

6. A fluidic oscillator as claimed in any one preceding Claim, characterised in that the first flow section (4) has an outlet end (14) connected to an inlet end (16) of the second flow section (5) by a third flow section (6).

7. A fluidic oscillator as claimed in Claim 6, characterised in that the third flow section (6) is disposed substantially at right angles both to the outlet end (14) of the first flow section (4) and to the inlet end (16) of the second flow section (5), and the third flow section (6) has substantially parallel sidewalls.

8. A fluidic oscillator as claimed in Claim 3 and Claim 7, characterised in that the third flow section (6) has a flow-splitting partition (24) disposed parallel to the sidewalls of the third flow section, and said flow-splitting partition (24) is aligned with the flow-splitting body (19) of the second flow section (5).

9. A fluidic oscillator as claimed in Claim 8, characterised in that a flow-splitting member (13) is disposed at and adjacent to the outlet end (14) of the first flow section (4) in alignment with the flow splitting partition (24) of the third flow section (6).

10. A fluidic oscillator as claimed in any one of Claims 6 to 8, characterised in that the three flow sections (4, 5, 6) are formed respectively in three parts (1, 2, 3) which are assembled together to construct the oscillator.

11. A fluidic oscillator as claimed in Claim 10 and Claim 2, characterised in that the flow conditioner is mounted in a fourth part (26) which is assembled to the inlet end (7) of the first flow section (4) and to the outlet end (18) of the second flow section (5).

12. A shunt flowmeter (1, 2, 3, 30) for measuring fluid flow through a pipeline (25) characterised by a flow sensor (30) and a fluidic oscillator as claimed in any one preceding claim and said sensor being provided to detect oscillations in the fluidic oscillator via the sensor ports (22).

13. A shunt flowmeter as claimed in Claim 12, characterised in that said flow sensor (30) includes a silicon chip sensor.

14. A shunt flowmeter as claimed in Claim 12 or Claim 13, characterised in that the shunt flowmeter is mounted in a shunt combination with a pipeline (25) so that the inlet end (7) to the first flow section (4) is connected to a shunt outlet port (27) in the pipeline and the outlet end (18) of the second flow section is connected to a shunt return port (28) in the pipeline.

15. A shunt flowmeter as claimed in 13, characterised in that the shunt flowmeter is mounted in a shunt combination with a pipeline (25) so that the inlet end (7) to the first flow section (4) is connected to a shunt outlet port (27) in a wall of the pipeline (25) and the outlet end (18) of the second flow section (5) is connected to a shunt return port (28) in the wall of the pipeline, and internally of the pipeline (25) there is a restriction (29) positioned between the shunt outlet and inlet ports (27, 28).

## Patentansprüche

1. Fluidischer Oszillator (1, 2, 3) für einen Nebenschluß-Durchflußmesser (1, 2, 3, 30) zum Messen einer Strömungsmittelströmung durch eine Rohrleitung (25), wobei der fluidische Oszillator sich zusammensetzt aus einem ersten Strömungsabschnitt (4) mit einem Einlaßende (7), einer Wechselwirkungskammer (8), einer Haupt-Strömungsmitteldüse (9), die mit dem Einlaßende des ersten Abschnitts verbunden und in die Wechselwirkungskammer gerichtet ist, und mit divergierenden Seitenwänden (10), die sich stromabwärts von der Wechselwirkungskammer (8) erstrecken, und aus einem zweiten Strömungsabschnitt (5) mit einem Auslaßende (18) und Sensoröffnungen (22), die in den zweiten Strömungsabschnitt (5) stromaufwärts vom Auslaßende (18) münden, dadurch gekennzeichnet, daß der erste und zweite Strömungsabschnitt (4, 5) nebeneinander so angeordnet sind, daß die allgemeine Richtung der Strömungsmittelströmung durch den ersten Strömungsabschnitt (4) hindurch im wesentlichen parallel, aber entgegengesetzt zur allgemeinen Richtung der Strömungsmittelströmung durch den zweiten Strömungsabschnitt (5) hindurch verläuft, und daß die Sensoröffnungen (22) jeweils am einen Ende an einer Außenstelle des fluidischen Oszillators (1, 2, 3) münden und an einem anderen Ende in den zweiten Strömungsabschnitt (5) münden, so daß mittels der Sensoröffnungen (22) ein Durchflußsensor (30) mit dem zweiten Strömungsabschnitt (5) zur Ermittlung von Schwingungen in der Strömungsmittelströmung durch den zweiten Strömungsabschnitt (5) hindurch verbunden werden kann.

2. Fluidischer Oszillator nach Anspruch 1, dadurch gekennzeichnet, daß ein Strömungs-Konditionierer (26) zumindest am Einlaßende (7) des ersten Strömungsabschnitts (4) angeordnet ist, wobei der Konditionierer (26) sowohl dazu dient, die Turbulenz des in das Einlaßende (7) strömenden Strömungsmittels zu fördern, als auch als Filter zur Beseitigung von Feststoffpartikeln aus dem Strömungsmittel wirksam ist.

3. Fluidischer Oszillator nach Anspruch 1 oder 2, dadurch gekennzeichnet, daß der zweite Strömungsabschnitt (5) einen Strömungs-Spaltungskörper (19) zur körperlichen Aufspaltung der Strömung aus dem ersten Strömungsabschnitt (4) enthält.

4. Fluidischer Oszillator nach Anspruch 3, dadurch gekennzeichnet, daß die Sensoröffnungen (22) jeweils auf entgegengesetzten Seiten des Strömungs-Spaltungskörpers (19) angeordnet und nicht in diesem Strömungs-Spaltungskörper eingeformt sind.

5. Fluidischer Oszillator nach Anspruch 4, dadurch gekennzeichnet, daß der zweite Strömungsabschnitt (5) divergierende Seitenwände (15) aufweist, die in Strömungs-Einschnürungen (17) nahe dem Auslaßende (18) des zweiten Strömungsabschnitts enden.

6. Fluidischer Oszillator nach einem der vorangehenden Ansprüche, dadurch gekennzeichnet, daß der erste Strömungsabschnitt (4) ein Auslaßende (14) aufweist, das mit einem Einlaßende (16) des zweiten Strömungsabschnitts (5) durch einen dritten Strömungsabschnitt (6) verbunden ist.

7. Fluidischer Oszillator nach Anspruch 6, dadurch gekennzeichnet, daß der dritte Strömungsabschnitt (6) im wesentlichen rechtwinklig sowohl zum Auslaßende (14) des ersten Strömungsabschnitts (4) als auch zum Einlaßende (16) des zweiten Strömungsabschnitts (5) angeordnet ist und im wesentlichen parallele Seitenwände aufweist.

8. Fluidischer Oszillator nach Anspruch 3 und 7, dadurch gekennzeichnet, daß der dritte Strömungsabschnitt (6) eine die Strömung aufspaltende Scheidewand (24) aufweist, die parallel zu den Seitenwänden des dritten Strömungsabschnitts angeordnet ist, und daß diese Scheidewand (24) mit dem Strömungs-Spaltungskörper (19) des zweiten Strömungsabschnitts (5) fluchtet.

9. Fluidischer Oszillator nach Anspruch 8, dadurch gekennzeichnet, daß ein Strömungs-Spaltungskörper (13) am Auslaßende (14) des ersten Strömungsabschnitts (4) in Flucht mit der Strömungs-Scheidewand (24) des dritten Strömungsabschnitts (6) angeordnet ist.

10. Fluidischer Oszillator nach einem der Ansprüche 6 bis 8, dadurch gekennzeichnet, daß die drei Strömungsabschnitte (4, 5, 6) jeweils in drei Teilen (1, 2, 3) gebildet sind, die zusammengebaut werden, um den Oszillator anzufertigen.

11. Fluidischer Oszillator nach Anspruch 10 und 2, dadurch gekennzeichnet, daß der Strömungs-Konditionierer in einem vierten Teil (26) untergebracht ist, welches mit dem Einlaßende (7) des ersten Strömungsabschnitts (4) und dem Auslaßende (18) des zweiten Strömungsabschnitts (5) zusammengebaut ist.

12. Nebenschluß-Durchflußmesser (1, 2, 3, 30) zum Messen der Strömungsmittelströmung durch eine Rohrleitung (25) hindurch, gekennzeichnet durch einen Strömungssensor (30) und einen fluidischen Oszillator nach einem der vorangehenden Ansprüche, wobei der Sensor vorgesehen ist, um Schwingungen im fluidischen Oszillator über die Sensoröffnungen (22) zu ermitteln.

13. Nebenschluß-Durchflußmesser nach Anspruch 12, dadurch gekennzeichnet, daß der Strömungssensor (30) einen Siliziumchip-Sensor enthält.

14. Nebenschluß-Durchflußmesser nach Anspruch 12 oder 13, dadurch gekennzeichnet, daß er in einer Nebenschluß-Kombination mit einer Rohrleitung (25) angebracht ist, so daß das Einlaßende (7) zum ersten Strömungsabschnitt (4) mit einer Nebenschluß-Auslaßöffnung (27) in der Rohrleitung verbunden ist, während das Auslaßende (18) des zweiten Strömungsabschnitts mit einer Nebenschluß-Rückkehröffnung (28) in der Rohrleitung verbunden ist.

15. Nebenschluß-Durchflußmesser nach Anspruch 13, dadurch gekennzeichnet, daß er in einer Nebenschluß-Kombination mit einer Rohrleitung (25) so angebracht ist, daß das Einlaßende (7) zum ersten Strömungsabschnitt (4) mit einer Nebenschluß-Auslaßöffnung (27) in einer Wand der Rohrleitung (25) verbunden ist, während das Auslaßende (18) des zweiten Strömungsabschnitts (5) mit einer Nebenschluß-Rückkehröffnung (28) in der Wand der Rohrleitung verbunden ist, und daß im Innern der Rohrleitung (25) eine Einschnürung (29) zwischen den Nebenschluß-Auslaß- und -Einlaßöffnungen (27, 28) angeordnet ist.

**Revendications**

1. Oscillateur fluidique (1, 2, 3) pour un débitmètre (1, 2, 3, 30) à dérivation pour la mesure du débit d'un fluide dans une canalisation (25), l'oscillateur fluidique comprenant un premier tronçon d'écoulement (4) ayant une extrémité d'entrée (7), une chambre d'interaction (8), un ajutage principal (9) à fluide relié à l'extrémité d'entrée du premier tronçon et dirigé vers l'intérieur de la chambre d'interaction, des parois latérales divergentes (10) s'étendant vers l'aval de la chambre (8) d'interaction, et des boucles (11) de réaction s'étendant depuis les parois latérales divergentes jusqu'à des ajutages de commande (12) à la chambre d'interaction, et un deuxième tronçon (15) d'écoulement en aval du, et juxtaposé au, premier tronçon (4) d'écoulement, ledit second tronçon (5) d'écoulement ayant une extrémité (18) de sortie, et des orifices (22) de capteur s'ouvrant dans le deuxième tronçon (5) d'écoulement en amont de ladite extrémité (18) de sortie, caractérisé en ce que les premier et second tronçons (4, 5) d'écoulement sont disposés côte à côte afin que la direction générale d'écoulement de fluide dans le premier tronçon (4) d'écoulement soit sensiblement parallèle, mais opposé à la direction générale d'écoulement de fluide dans le deuxième tronçon (5) d'écoulement, et les orifices (22) de capteur s'ouvrant chacun par une extrémité à l'extérieur de l'oscillateur fluidique (1, 2, 3) et s'ouvrant chacun, par une autre extrémité, dans le deuxième tronçon (5) d'écoulement afin qu'au moyen des orifices (22) de capteur, un capteur (30) de débit puisse être relié au deuxième tronçon (5) d'écoulement pour détecter des oscillations dans l'écoulement de fluide parcourant le deuxième tronçon (5) découlement.

2. Oscillateur fluidique selon la revendication 1, caractérisé en ce qu'un conditionneur (26) d'écoulement est disposé en travers d'au moins une extrémité d'entrée (7) du premier tronçon (4) d'écoulement, le conditionneur (26) servant à la fois à favoriser une turbulence du fluide s'écoulant vers l'intérieur de l'extrémité d'entrée (7) et de filtre pour éliminer des particules de matière du fluide.

3. Oscillateur fluidique selon la revendication 1 ou la revendication 2, caractérisé en ce que le deuxième tronçon (5) d'écoulement comprend un corps (19) de division d'écoulement destiné à diviser physiquement l'écoulement provenant du premier tronçon (4) d'écoulement.

4. Oscillateur fluidique selon la revendication 3, caractérisé en ce que les orifices (22) de capteur sont disposés respectivement sur des côtés opposés du corps (19) de division d'écoulement et ne sont pas formés dans ledit corps de division d'écoulement.

5. Oscillateur fluidique selon la revendication 4, caractérisé en ce que le deuxième tronçon (5) d'écoulement comporte des parois latérales divergentes (15) qui se terminent dans un étranglement (17) d'écoulement adjacent à l'extrémité de sortie (18) du deuxième tronçon d'écoulement.

6. Oscillateur fluidique selon l'une quelconque des revendications précédentes, caractérisé en ce que le premier tronçon (4) d'écoulement présente une extrémité (14) de sortie reliée à une extrémité d'entrée (16) du deuxième tronçon (5) d'écoulement par un troisième tronçon (6) d'écoulement.

7. Oscillateur fluidique selon la revendication 6, caractérisé en ce que le troisième tronçon (6) d'écoulement est disposé sensiblement à angle droit à la fois avec l'extrémité (14) de sortie du premier tronçon (4) d'écoulement et avec l'extrémité (16) d'entrée du deuxième tronçon (5) d'écoulement, et le troisième tronçon (6) d'écoulement comporte des parois latérales sensiblement parallèles.

8. Oscillateur fluidique selon la revendication 3 et la revendication 7, caractérisé en ce que le troisième tronçon (6) d'écoulement comporte une cloison (24) de division d'écoulement disposée parallèlement aux parois latérales du troisième tronçon d'écoulement, et ladite cloison (24) de division d'écoulement est alignée avec le corps (19) de division d'écoulement du deuxième tronçon (5) d'écoulement.

9. Oscillateur fluidique selon la revendication 8, caractérisé en ce qu'un élément (13) de division d'écoulement est disposé à, et à proximité immédiate de, l'extrémité de sortie (14) du premier tronçon (4) d'écoulement en alignement avec la cloison (24) de division d'écoulement du troisième tronçon (6) d'écoulement.

10. Oscillateur fluidique selon l'une quelconque des revendications 6 à 8, caractérisé en ce que les trois tronçons d'écoulement (4, 5, 6) sont formés respectivement dans trois pièces (1, 2, 3) qui sont assemblées entre elles pour constituer l'oscillateur.

11. Oscillateur fluidique selon la revendication 10 et la revendication 2, caractérisé en ce que le conditionneur d'écoulement est monté dans une quatrième pièce (26) qui est montée sur l'extrémité d'entrée (7) du premier tronçon (4) d'écoulement et sur l'extrémité de sortie (18) du deuxième tronçon (5) d'écoulement.

12. Débitmètre à dérivation (1, 2, 3, 30) destiné à mesurer l'écoulement d'un fluide dans une canalisation (25), caractérisé par un capteur (30) de débit et un oscillateur fluidique selon l'une quelconque des revendications précédentes, ledit capteur étant prévu pour détecter des oscillations dans l'oscillateur fluidique par l'intermédiaire des orifices (22) de capteur.

13. Débitmètre à dérivation selon la revendication 12, caractérisé en ce que ledit capteur (30) de débit comprend un capteur à puce de silicium.

14. Débitmètre à dérivation selon la revendication 12 ou la revendication 13, caractérisé en ce que le débitmètre à dérivation est monté dans un montage en dérivation avec une canalisation (25) afin que l'extrémité d'entrée (7) du premier tronçon (4) d'écoulement soit reliée à l'orifice (27) de sortie de dérivation dans la canalisation et que l'extrémité (18) de sortie du deuxième tronçon d'écoulement soit reliée à un orifice (28) de retour de dérivation dans la canalisation.

15. Débitmètre à dérivation selon la revendication 13, caractérisé en ce qu'il est monté en dérivation avec une canalisation (25) afin que l'extrémité d'entrée (7) du premier tronçon (4) d'écoulement soit reliée à un orifice (27) de sortie de dérivation dans une paroi de la canalisation (25) et que l'extrémité de sortie (18) du deuxième tronçon (5) d'écoulement soit reliée à un orifice (28) de retour de dérivation dans la paroi de canalisation, un étranglement (29) étant placé à l'intérieur de la canalisation (25) entre les orifices (27, 28) de sortie et d'entrée de la dérivation.

Fig.1

Fig.2

Fig.3

Fig.4

Fig.5

Fig.6

Fig.7